(19) **Europäisches Patentamt**

**European Patent Office**

**Office européen des brevets**

(11) **EP 1 701 365 A1**

(12) **EUROPEAN PATENT APPLICATION**
published in accordance with Art. 158(3) EPC

(43) Date of publication:
**13.09.2006 Bulletin 2006/37**

(51) Int Cl.:
*H01G 9/058* (2006.01)

(21) Application number: **04807802.6**

(22) Date of filing: **17.12.2004**

(86) International application number:
**PCT/JP2004/019446**

(87) International publication number:
**WO 2005/064630 (14.07.2005 Gazette 2005/28)**

(84) Designated Contracting States:
**AT BE BG CH CY CZ DE DK EE ES FI FR GB GR HU IE IS IT LI LT LU MC NL PL PT RO SE SI SK TR**

(30) Priority: **26.12.2003 JP 2003433408**

(71) Applicant: **TDK Corporation
Tokyo 103-8272 (JP)**

(72) Inventors:
• **HINOKI, Kiyonori,
c/o TDK Corporation
Tokyo 103-8272 (JP)**
• **KATAI, Kazuo,
c/o TDK Corporation
Tokyo 103-8272 (JP)**

• **MIYAKI, Yousuke,
c/o TDK Corporation
Tokyo 103-8272 (JP)**
• **TANAKA, Hideki, c/o TDK Corporation
Tokyo 103-8272 (JP)**
• **SUZUKI, Tadashi,
c/o TDK Corporation
Tokyo 103-8272 (JP)**

(74) Representative: **Kilian, Helmut
Wilhelms, Kilian & Partner
Patentanwälte
Eduard-Schmid-Strasse 2
81541 München (DE)**

(54) **METHOD FOR PRODUCING ELECTRODE FOR CAPACITOR**

(57)    The present invention provides a method of producing an electrode for electric double layer capacitor, which yields the electrode having excellent electrode characteristics with good production suitability, using a coating material exhibiting a good dispersion state. A method of producing an electrode for a capacitor, the method comprising the steps of: applying an undercoat layer coating material which comprises at least electrically conductive particles, a binder and a solvent onto the current collector to form the undercoat layer; and applying an electrode layer coating material which comprises at least a carbon material, a binder and a solvent onto the undercoat layer to form the electrode layer. In the preparation of the undercoat layer coating material and/or in the preparation of the electrode layer coating material, dispersing treatment is conducted with ceramic beads as a dispersing medium.

EP 1 701 365 A1

**Description**

TECHNICAL FIELD

The present invention relates to a method of producing an electrode for an electric double layer capacitor.

BACKGROUND ART

Electrochemical capacitors, a typical example of which is an electric double layer capacitor, are expected, for example, as backups for power sources of portable devices (small-sized electric devices) and others, auxiliary power sources for electric automobiles or hybrid automobiles, and the like. Various investigations for improving the performance of the capacitors have been made.

As portable devices and others have been becoming smaller and lighter in recent years, it has been particularly required to make an electric double layer capacitor smaller and lighter while the capacitor keeps sufficient performances required for devices on which the capacitor is to be mounted. In other words, an improvement in energy density per unit mass of an electric double layer capacitor, and an improvement in energy density per unit volume thereof have been required. Consequently, electrodes used in the electric double layer capacitor have been required to be made smaller and lighter.

As the electrodes, which are used in electric double layer capacitors, there are known electrodes fabricated by making fibrous activated carbon in a felt form and then vapor-depositing or bonding a current collector made of aluminum or the like to one side of the felt-formactivatedcarbon, electrodes fabricated by kneading granular activated carbon together with a binder such as tetrafluoroethylene or the like, forming the kneaded material into a sheet form, and vapor-depositing or bonding a current collector to one side of the sheet, and other electrodes.

However, in the above-described conventional electrodes, which are fabricated by vapor-depositing or bonding a current collector to activated carbon formed in a felt or sheet form, physical adhesiveness between the activated carbon and the current collector is insufficient, and a decrease in the internal resistance is also insufficient. Additionally, there is a limit to an improvement in electrode characteristics. It is therefore difficult to make the electrodes smaller and lighter while the electrode characteristics are sufficiently maintained.

There is also suggested, for example, a tabular electrode fabricated by forming a kneaded product composed of a binder and a porous material such as activated carbon into a sheet form so as to yield a polarizable electrode (electrode layer), and then bonding the resultant electrode to a current collector through an intermediate layer composed of carbon black and a binder. In the electrode, the adhesiveness between the electrode layer and the current collector is improved and the contact resistance therebetween is decreased (see, for example, Japanese Laid-Open Patent Publication No. 2000-208373, Japanese Laid-Open Patent Publication No. 2001-284184, Japanese Laid-Open Patent Publication No. 2002-75805, and Japanese Laid-Open Patent Publication No. 2002-50546).

However, in each of the above-mentioned publications, an electrode layer is beforehand formed in a sheet form, and this sheet-form electrode layer is bonded to a current collector through an intermediate layer to fabricate an electrode. It is therefore necessary that the electrode layer has a thickness satisfying a mechanical strength for maintaining the shape of the sheet. Thus, it is difficult to make the thickness of the electrode layer smaller.

DISCLOSURE OF THE INVENTION

Object of the Invention

Thus, the present inventors have eagerly repeated research in order to make an electrode layer thinner and make an electrode smaller and lighter. As a result, the present inventors have found out that an electrode having a thinned electrode layer and having an excellent adhesive property between the electrode layer and a current collector can be obtained by a production method which comprises the steps of forming an undercoat layer comprising electrically conductive particles and a binder on a current collector by coating, and then forming an electrode layer comprising a carbon material and a binder on the undercoat layer by coating.

In the above-mentioned production, an undercoat layer coating material which comprises electrically conductive particles, a binder and a solvent; and an electrode layer coating material which comprises a carbon material, a binder and a solvent are used. However, a case where the dispersion state is insufficient in these coating materials may be observed.

An object of the present invention is to provide a method of producing an electrode for electric double layer capacitor, which yields the electrode having excellent electrode characteristics with good production suitability, using a coating material exhibiting a good dispersion state.

Summary of the Invention

The present inventors have made further research to find out that an undercoat layer coating material exhibiting a good dispersion state is obtained by conducting dispersing treatment using ceramic beads as a dispersing medium, at the time of preparing an undercoat layer coating material which comprises electrically conductive particles, a binder and a solvent; and that an electrode layer coating material exhibiting a good dispersion state is obtained by conducting dispersing treatment using ceramic beads as a dispersing medium, at the time of preparing an electrode layer coating material which comprises a carbon material, a binder and a solvent.

The present invention encompasses the following inventions.

(1) A method of producing an electrode for a capacitor, which comprises a current collector and an electrode layer on the current collector, the method comprising the step of:

mixing at least a carbon material, a binder and a solvent, subjecting the resultant mixture to dispersing treatment with ceramic beads as a dispersing medium, so as to prepare an electrode layer coating material, and then applying the electrode layer coating material onto the current collector, so as to form the electrode layer.

(2) A method of producing an electrode for a capacitor, which comprises a current collector, an undercoat layer on the current collector, and an electrode layer on the undercoat layer, the method comprising the steps of:

mixing at least electrically conductive particles, a binder and a solvent, subjecting the resultant mixture to dispersing treatment with ceramic beads as a dispersing medium, so as to prepare an undercoat layer coating material, and then applying the undercoat layer coating material onto the current collector, so as to form the undercoat layer; and
applying an electrode layer coating material which comprises at least a carbon material, a binder and a solvent onto the undercoat layer, so as to form the electrode layer.

(3) A method of producing an electrode for a capacitor, which comprises a current collector, an undercoat layer on the current collector, and an electrode layer on the undercoat layer, the method comprising the steps of:

mixing at least electrically conductive particles, a binder and a solvent, subjecting the resultant mixture to dispersing treatment with ceramic beads as a dispersing medium, so as to prepare an undercoat layer coating material, and then applying the undercoat layer coating material onto the current collector, so as to form the undercoat layer; and
mixing at least a carbon material, a binder and a solvent, subjecting the resultant mixture to dispersing treatment with ceramic beads as a dispersing medium, so as to prepare an electrode layer coating material, and then applying the electrode layer coating material onto the undercoat layer, so as to form the electrode layer.

At the time of preparing an undercoat layer coating material which comprises electrically conductive particles, a binder and a solvent, dispersing treatment is conducted with ceramic beads as a dispersing medium, whereby the undercoat layer coating material is prepared in a good dispersion state without agglomerate. Consequently, an undercoat layer wherein the binder is uniformly dispersed is formed with good production suitability, and gives a strong adhesive property between a current collector and an electrode layer.

At the time of preparing an electrode layer coating material which comprises a carbon material, a binder and a solvent, dispersing treatment is conducted with ceramic beads as a dispersing medium, whereby the electrode layer coating material is prepared in a good dispersion state without agglomerate. Consequently, an electrode layer having excellent electrode characteristics is obtained with good production suitability.

As described above, according to the present invention, an electrode for electric double layer capacitor, which is excellent in electrode characteristics, can be produced with good production suitability.

MODES FOR CARRYING OUT THE INVENTION

The electrode for an electric double layer capacitor fabricated in the present invention is composed mainly of a current collector, an undercoat layer on the current collector, and an electrode layer on the undercoat layer. A lead, which is used as an electrode connecting terminal, is usually formed at an end of the current collector.

The current collector is not specifically limited and may be any good conductor capable of transferring charges sufficiently through the undercoat layer into the electrode layer, and is permitted to be a current collector used in known electrodes for capacitor. The current collector is, for example, a metal foil made of Al or the like. Examples of the metal foil include an etched foil, a rolled foil, and others. The current collector is preferably an etched aluminum foil.

The thickness of the current collector is preferably from 20 to 50 $\mu$m, more preferably from 20 to 30 $\mu$m from the viewpoint of a decrease in the size and the weight of the electrode.

The undercoat layer is arranged between the current collector and the electrode layer, and causes the current collector and the electrode layer to adhere physically and electrically to each other. The undercoat layer comprises, as constituents thereof, at least electrically conductive particles and a binder capable of bonding/adhering to the electrically conductive particles. The undercoat layer is formed by applying an undercoat layer coating material which comprises the electrically conductive particles, the binder and a solvent on the current collector.

The electrically conductive particles are not limited to any especial kind if the particles have electron conductivity making it possible to advance the transfer of charges sufficiently between the current collector and the electrode layer. The particles may be, for example, particles made of a carbon material having electron conductivity. The carbon material may be carbon black or graphite from the viewpoint of the electron conductivity thereof. About the carbon material particles, the lattice plane spacing ($d_{002}$) thereof is preferably from 0.335 to 0.338 nm and the thickness of each of crystallites ($Lc_{002}$) thereof is preferably from 50 to 80 nm , which are determined by X-ray diffraction analysis, from the viewpoint of the electron conductivity.

Examples of the carbon black include acetylene black, Ketjen black, channel black, furnace black, thermal black, and others. Of these, acetylene black is preferable. The average particle diameter of the carbon black is preferably from 25 to 50 nm, and the BET specific surface area thereof is preferably 50 $m^2$/g or more, more preferably from 50 to 140 $m^2$/g. The use of such carbon black makes it possible to give excellent electron conductivity to the undercoat layer so as to decrease the internal resistance of the electrode.

Examples of the graphite include natural graphite, artificial graphite, expanded graphite, and others. Of these, artificial graphite is preferable. The average particle diameter of the graphite is preferably from 4 to 6 $\mu$m, and the BET specific surface area thereof is preferably 10 $m^2$/g or more, more preferably from 15 to 30 $m^2$/g. The use of such graphite makes it possible to give excellent electron conductivity to the undercoat layer so as to decrease the internal resistance of the electrode.

As the carbon material, only one out of the above-mentioned carbon blacks and graphites may be used, or two or more out of them may be used in combination.

The binder in the undercoat layer is not specifically limited and may be any binder capable of bonding/adhering to the electrically conductive particles. Examples thereof include polytetrafluoroethylene (PTFE), polyvinylidene fluoride (PVDF), polyethylene (PE), polypropylene (PP), and fluororubber. Of these, fluororubber is preferable.

Examples of the fluororubber include vinylidene fluoride-hexafluoropropylene (VDF-HFP) copolymer, vinylidene fluoride-hexafluoropropylene-tetrafluoroethylene (VDF-HFP-TFE) copolymer, vinylidene fluoride-pentafluoropropylene (VDF-PFP) copolymer, vinylidene fluoride-pentafluoropropylene-tetrafluoroethylene (VDF-PFP-TFE) copolymer, vinylidene fluoride-perfluoromethyl vinyl ether-tetrafluoroethylene (VDF-PFMVE-TFE) copolymer, vinylidene fluoride-chlorotrifluoroethylene (VDF-CTFE) copolymer, ethylene-tetrafluoroethylene copolymer, propylene-tetrafluoroethylene copolymer, and the like. Of these, fluororubbers wherein two selected from the group consisting of VDF, HFP and TFE are copolymerized are preferable, and VDF-HFP-TFE copolymer is particularly preferable in respect to improvement of the adhesive property between the current collector and the electrode layer and improvement of the chemical resistance.

As the binder(s), only one out of the above binders may be used, or two or more out of them may be used in combination.

The amount of the binder incorporated into the undercoat layer is varied by the specific surface area of the electrically conductive particles, the strength of the target electrode and others, and is preferably from 30 to 80% by weight, more preferably from 50 to 70% by weight of the dried undercoat coating layer (the electrically conductive particles + the binder). As the binder has a higher binding/adhering performance to the electrically conductive particles, the amount of the incorporated binder may be smaller in order to obtain a good adhesive property between the current collector and the electrode layer.

The solvent used in the coating material for undercoat layer is not specifically limited and may be any solvent wherein the binder can be dissolved, and an ordinary organic solvent may be used. Specific examples of the organic solvent include saturated hydrocarbons such as hexane; aromatic hydrocarbons such as toluene and xylene; alcohols such as methanol, ethanol, propanol, and butanol; ketones such as acetone, methyl ethyl ketone (MEK), methyl isobutyl ketone (MIBK), and diisobutyl ketone; esters such as ethyl acetate and butyl acetate; ethers such as tetrahydrofuran, dioxane, and diethyl ether; amides such as N,N-dimethylformamide, N-methylpyrrolidone, and N,N-dimethylacetamide; and halogenated hydrocarbons such as ethylene chloride, and chlorobenzene. Of these, ketone type and amide type solvents are preferable since the fluororubber can be dissolved therein. These solvents may be used alone or in a mixture of two or more thereof.

The amount of the solvent in the coating material for undercoat layer is preferably from about 600 to 2,000 parts by weight for 100 parts by weight of the total of the electrically conductive particles and the binder. The amount of the solvent is appropriately decided, considering the applicability of the coating material, and other factors.

In the preparation of the coating material for undercoat layer, the electrically conductive particles, the binder and the solvent are first mixed or kneaded in a usual manner to yield a slurry. The mixing or kneading can be performed by use of, for example, a roll mill, a planetary mixer, an open kneader, a continuous kneader, or a pressure kneader.

Next, the resultant slurry is subjected to dispersing treatment with ceramic beads as a dispersing medium to obtain the coating material for undercoat layer. Examples of the ceramic beads include zirconia ($ZrO_2$) beads, alumina ($Al_2O_3$) beads, titania ($TiO_2$) beads, and the like. The use of the zirconia beads, which have a high specific gravity, is preferable from the viewpoint of an improvement in dispersion efficiency. The particle diameter of the ceramic beads is preferably from about 0.1 to 1.0 mm, more preferably from 0.1 to 0.8 mm in order to improve the dispersion property. As the particle diameter of the beads is smaller, more fine (more satisfactory) dispersion can be conducted. However, if the particle diameter of the beads is too small, the mass of each of the beads gets too small so that the collision energy thereof is reduced. Thus, the dispersion property tends to deteriorate. If the particle diameter of the beads is smaller than 0.1 mm, the effect of improving the dispersion property is not obtained very much, and moreover, if the beads are worn away by the use in a dispersing machine for a long time so that the particle diameter becomes small, it is feared that the beads held in the machine leak out from the screen, mesh, gaps or the like of the machine so as to be mixed with the coating material. On the other hand, if the particle diameter of the beads is larger than 1.0 mm, it is necessary to conduct dispersion for a long time. Thus, the workability is liable to deteriorate.

When glass beads are used for the dispersing treatment, the beads are worn away so that sodium ions therefrom are incorporated into the coating material. When steel beads are used, the beads are worn away so that the metal is incorporated into the coating material. The incorporation is not preferred because the effect of self-discharge (short-circuit) is produced. For this reason, the ceramic beads are used in the present invention.

It is advisable to use, as the dispersing machine, for example, a sand grinder mill, a pin mill, an attritor, or a ball mill. The retention time of the slurry in the dispersing machine is preferably from about 0.1 to 60 minutes, more preferably from 1 to 5 minutes. If the retention time is less than 0.1 minute, the dispersing treatment gets insufficient so that a sufficient adhesive property of the undercoat layer is not easily obtained. On the other hand, sufficient dispersing treatment can be conducted for a retention time of 60 minutes; therefore, a retention time exceeding 60 minutes is unnecessary. Herein, the retention time is defined by the following equation.

$$\text{Retention time = (Empty volume [L] of vessel of dispersing machine/Volume [L] of slurry)} \times \text{Dispersing time}$$

The filling ratio of the beads is preferably set into a range of 60 to 85% by weight. The bead filling ratio is defined by the following equation.

$$\text{Bead filling ratio (\% by weight) = [Bead mass [g]]/(Empty volume [L] of vessel of dispersing machine} \times \text{Bead density [g/L]} \times 0.6)] \times 100$$

If the bead filling ratio is less than 60% by weight, the dispersing treatment tends to get insufficient so as to decrease the dispersing efficiency. If the bead filling ratio exceeds 85% by weight, the beads are excessively filled into the dispersing machine so that rotary parts of the machine are not easily rotated. Consequently, loads are liable to be applied to the parts so as to generate heat easily.

Such dispersing treatment of the slurry with the ceramic beads permits the preparation of a coating material for undercoat layer in a good dispersion state without agglomerate.

The prepared coating material for undercoat layer is applied onto a current collector, and then dried.

The application of the coating material for undercoat layer onto the current collector can be performed by an ordinary well-known coating method, examples of which include reverse roll method, direct roll method, blade method, knife method, extrusion nozzle method, curtain method, gravure roll method, bar coat method, dip method, kiss coat method, and squeeze method. A good surface state of the coating layer can be obtained by selecting the solvent composition of the coating material and drying conditions thereof in such a manner that the coating material is applied at a coating speed of 5 to 100 m/minute while the current collector is traveled.

The drying temperature is preferably from 50 to 150°C, more preferably from 70 to 140°C. If the drying temperature is less than 50°C, the solvent is insufficiently dried. If the drying temperature exceeds 150°C, the evaporation rate of the solvent gets too high so that the surface state of the undercoat layer may deteriorate. The thickness of the undercoat layer is preferably set into a range of about 0.2 to 10 $\mu$m from the viewpoint of a decrease in the size and the weight of the electrode and from the viewpoint of good electric conductivity between the current collector and the electrode layer.

The electrode layer is a layer which is formed on the undercoat layer and contributes to electric charge and discharge. This layer comprises, at constituents thereof, at least a carbon material having electric conductivity and a binder capable of bonding/adhering to the carbon material. An electrode layer coating material which comprises the carbon material, the binder and the solvent is applied onto the undercoat layer, thereby forming an electrode coating layer.

The carbon material is not specifically limited and may be any carbon material having electric conductivity. Examples thereof include granular or fibrous activated carbon, which is subjected to activating treatment. The average particle diameter of the carbon material is preferably from 3 to 20 $\mu$m, and the BET specific surface area thereof is preferably 1,500 m$^2$/g or more, more preferably from 2,000 to 2,500 m$^2$/g. By the use of such a carbon material, the electrostatic capacity of the electrode can be made high.

The binder in the electrode layer is not specifically limited and may be any binder capable of bonding/adhering to the carbon material, and examples thereof include the same binders as exemplified as the binder in the undercoat layer. Fluororubber is preferable. Examples of the fluororubber include the same fluororubbers as exemplified as the binder in the undercoat layer. Of the fluororubbers, fluororubbers wherein two selected from the group consisting of VDF, HFP and TFE are copolymerized are preferable, and VDF-HFP-TFE copolymer is particularly preferable in respect to improvement of the adhesive property to the undercoat layer and improvement of the chemical resistance. The binders for the electrode layer may be used alone or in combination of two or more thereof. It is also preferable to use the same binder in the undercoat layer and the electrode layer since a better adhesive property between the undercoat layer and the electrode layer can be obtained.

The amount of the binder incorporated into the electrode layer is varied by the specific surface area of the carbon material, the strength of the target electrode and others, and is preferably from 5 to 20% by weight, more preferably from 8 to 15% by weight of the dried electrode coating layer (the carbon material + the binder + an optional electrically conductive auxiliary, which will be described below). As the binder has a higher binding/adhering performance to the carbon material, the amount of the incorporated binder may be smaller.

If necessary, an electrically conductive auxiliary is used in the electrode layer. The electrically conductive auxiliary is used to help the transfer of charges between the electrode layer and the current collector. The electrically conductive auxiliary is not specifically limited and may be any material having electron conductivity. Examples thereof include carbon materials such as carbon black and graphite, which have been described as the electrically conductive particles in the undercoat layer. As the electrically conductive auxiliary, acetylene black having the above-mentioned average particle diameter and BET specific surface area are preferable from the viewpoint of high electron conductivity. The amount of the electrically conductive auxiliary incorporated into the electrode layer is preferably from 0.5 to 2.0% by weight of the dried electrode coating layer.

The solvent used in the coating material for electrode layer is not specifically limited and may be any solvent wherein the binder can be dissolved, and an ordinary organic solvent may be used. Examples of the organic solvent include the same organic solvents as exemplified as the organic solvent in the coating material for undercoat layer. Ketone type and amide type solvents are preferable since the fluororubber can be dissolved therein. These solvents may be used alone or in a mixture of two or more thereof.

The amount of the solvent in the coating material for electrode layer is preferably set into a range of about 200 to 400 parts by weight for 100 parts by weight of the total of the carbon material, the binder and the optional electrically conductive auxiliary. The amount of the solvent is appropriately decided, considering the applicability of the coating material, and other factors.

In the preparation of the coating material for electrode layer, the carbon material, the binder and the solvent are first mixed or kneaded in a usual manner to yield a slurry. The mixing or kneading can be performed by use of, for example, a roll mill, a planetary mixer, an open kneader, a continuous kneader, or a pressure kneader.

Next, the resultant slurry is subjected to dispersing treatment with ceramic beads as a dispersing medium to obtain the coating material for electrode layer. At the time of the dispersing treatment, ceramic beads are used as the dispersing medium, for the same reasons as described about the preparation of the coating material for undercoat layer. Examples of the ceramic beads include zirconia ($ZrO_2$) beads, alumina ($Al_2O_3$) beads, titania ($TiO_2$) beads, and the like. The use of the zirconia beads, which have a high specific gravity, is preferable from the viewpoint of an improvement in dispersion efficiency. The particle diameter of the ceramic beads is preferably from about 0.3 to 1.5 mm, more preferably from about 0.3 to 0.8 mm in order to improve the dispersion property. If the particle diameter of the beads is smaller than 0.3 mm, the effect of improving the dispersion property is not obtained very much. If the particle diameter of the beads is larger than 1.5 mm, it is necessary to conduct dispersion for a long time. Thus, the workability is liable to deteriorate.

It is advisable to use, as the dispersing machine, for example, a sand grinder mill, a pin mill, an attritor, or a ball mill. The retention time of the slurry in the dispersing machine is preferably from about 0.1 to 10 minutes, more preferably from 0.15 to 5 minutes. If the retention time is less than 0.1 minute, the dispersing treatment gets insufficient so that the strainer of the machine may be clogged. On the other hand, sufficient dispersing treatment can be conducted for a retention time of 10 minutes; therefore, a retention time exceeding 10 minutes is unnecessary. Herein, the retention time is defined by the above-mentioned equation.

The filling ratio of the beads, which is defined by the above-mentioned equation, is preferably set into a range of 60 to 85% by weight. If the bead filling ratio is less than 60% by weight, the dispersing treatment tends to get insufficient so as to decrease the dispersing efficiency. If the bead filling ratio exceeds 85% by weight, the beads are excessively filled into the dispersing machine so that rotary parts of the machine are not easily rotated. Consequently, loads are liable to be applied to the parts so as to generate heat easily.

Such dispersing treatment of the slurry with the ceramic beads permits the preparation of a coating material for electrode layer in a good dispersion state without agglomerate.

The prepared coating material for electrode layer is applied onto the undercoat layer, and then dried.

The application of the coating material for electrode layer onto the undercoat layer can be performed by an ordinary well-known coating method, examples of which include reverse roll method, direct roll method, blade method, knife method, extrusion nozzle method, curtain method, gravure roll method, bar coat method, dip method, kiss coat method, and squeeze method. A good surface state of the coating layer can be obtained by selecting the solvent composition of the coating material and drying conditions thereof in such a manner that the coating material is applied at a coating speed of 5 to 100 m/minute while the current collector is traveled.

The drying temperature is preferably from 50 to 150°C, more preferably from 70 to 140°C. If the drying temperature is less than 50°C, the solvent is insufficiently dried. If the drying temperature exceeds 150°C, the evaporation rate of the solvent gets too high so that the surface state of the electrode layer may deteriorate.

The thickness of the electrode layer is preferably set into a range of about 50 to 200 $\mu$m from the viewpoint of a decrease in the size and the weight of the electrode and from the viewpoint of obtaining a high electrostatic capacity. The thickness of the electrode layer can be also adjusted by subjecting the dried electrode layer to calendering treatment. The calendering treatment is usually conducted with a roll press machine. It is advisable to set the calendering pressure at this time within, e.g., a range of 4,900 to 24,500 N/cm (0.5 to 2.5 t/cm).

EXAMPLES

The present invention will be more specifically described byway of the following examples. However, the present invention is not limited by the examples.

[Example 1]

(Preparation of undercoat layer coating material)

70 g of acetylene black (trade name: Denka Black, manufactured by Denki Kagaku Kogyo Kabushiki Kaisha, BET specif ic surface area: 67 m$^2$/g) and 30 g of a fluororubber (trade name: Viton-GF, manufactured by Du Pont) were introduced into 186 g of methyl isobutyl ketone (MIBK). The mixture was kneaded for 45 minutes by means of a planetary mixer. 964 g of MIBK was further added to the kneaded product, and then the resultant was stirred for 1 hour to yield a slurry. The resultant slurry was introduced into a sand grinder mill, and then was subjected to dispersing treatment for a retention time of 2 minutes using Zirconia beads (zirconia ZrO$_2$, manufactured by Nikkato Corp., particle diameter: 0.3 mm) as a dispersingmedium. At this time, the peripheral velocity of the dispersing machine was set to 10 m/sec, the flow rate was set to 138 g/min (160 mL/min), and the bead filling ratio was set to 80% by weight. In this way, an undercoat layer coating material was prepared. The undercoat layer coating material was kept in a good dispersion state without the generation of any agglomerate.

(Preparation of electrode layer coating material)

90 g of granular activated carbon (trade name: RP-20, manufactured by Kuraray Chemical Co. , Ltd., aspect ratio: about 1.0) and 1 g of acetylene black (trade name: Denka Black, manufactured by Denki Kagaku Kogyo Kabushiki Kaisha, BET specif ic surface area: 67 m$^2$/g) were mixed for 15 minutes by means of a planetary mixer. 9 g of a fluororubber (trade name: Viton-GF, manufactured by Du Pont), 57 g of MIBK, and 81 g of propylene carbonate were introduced into the whole of the mixture. The mixture was kneaded for 45 minutes by means of a planetary mixer. Furthermore, 132 g of MIBK was added to the kneaded product, and then the resultant was stirred for 1 hour to yield a slurry. The resultant slurry was introduced into a sand grinder mill, and then was subjected to dispersing treatment for a retention time of 10 seconds using Zirconia beads (zirconia $ZrO_2$, manufactured by Nikkato Corp., particle diameter: 0.8 mm) as a dispersing medium. At this time, the peripheral velocity of the dispersing machine was set to 10 m/sec, the flow rate was set to 124 g/min (120 mL/min), and the bead filling ratio was set to 80% by weight. In this way, an electrode layer coating material was prepared. The electrode layer coating material was kept in a good dispersion state without the generation of any agglomerate.

The prepared electrode layer coating material was caused to pass through a strainer (size: 60 meshes/inch) equipped immediately before the coating step of fabricating an electrode. The coating material was continuously supplied for 24 hours while the supplying flow rate of the coating material was set to 345 g/min. As a result, the strainer was not clogged. The strainer did not need to be exchanged, and working efficiency was very good.

(Fabrication of electrode)

The above-mentioned undercoat layer coating material was uniformly applied onto one surface of an aluminum foil (thickness: 30 $\mu$m) as a current collector by gravure roll method, and then dried in a drying furnace at a temperature of 100°C to form an undercoat layer of 5 $\mu$m in thickness.

Next, the above-mentioned electrode layer coating material caused to pass through the strainer was uniformly applied onto the undercoat layer by gravure roll method, and then dried in a drying furnace at a temperature of 120°C to form an electrode layer of 175 $\mu$m in thickness. In this way, a raw electrode (electrode sheet) was obtained.

The resultant raw electrode was subjected to calendering treatment at a pressure of 9,800 N/cm (1 t/cm) with a roll press machine having a pair of metallic press rolls each having a diameter of 350 mm. In this way, an electrode layer of 120 $\mu$m in thickness was formed on each of two surfaces of the current collector, so as to yield an electrode.

The resultant electrode was cut into a rectangle (30 mm x 56 mm), and further dried in a vacuum at a temperature of 180°C for 60 hours to remove water content and the solvent adsorbed on the electrode layer and the undercoat layer. In this way, an electrode for electric double layer capacitor was fabricated. In order to fabricate an electric double layer capacitor, two electrodes, which were fabricated as above, were prepared for an anode and a cathode.

[Comparative Example 1]

An undercoat layer coating material was prepared in the same way as in Example 1 except that no dispersing treatment was conducted in the preparation of undercoat layer coating material. An electrode layer coating material was prepared in the same way as in Example 1 except that no dispersing treatment was conducted in the preparation of electrode layer coating material.

The prepared electrode layer coating material was caused to pass through a strainer (size: 60 meshes/inch) equipped immediately before the coating step of fabricating an electrode. The coating material was continuously supplied for 24 hours while the supplying flow rate of the coating material was set to 345 g/min. As a result, the strainer was clogged. It was necessary to exchange the strainer two times in 24 hours.

An electrode was fabricated in the same way as in Example 1.

(Fabrication of electric double layer capacitor)

The anode electrode and the cathode electrode obtained in Example 1 or Comparative Example 1 were used to fabricate an electric double layer capacitor as follows.

First, a lead (width: 2 mm, length: 10 mm) made of aluminum foil was arranged at an outer edge portion of the current collector surface of each of the fabricated anode and cathode, no electrode layer being formed on or over this surface. Next, the anode, a separator and the cathode were overlapped in this order and in a contact (and non-joined) state, so as to form a laminate (raw body). The used separator was a separator (trade name: TF4050, manufactured by Nippon Kodoshi Corp., size: 31 x 57 mm, thickness: 0.05 mm) made of regenerated cellulose nonwoven fabric.

As the material of a case of a capacitor, a flexible composite wrapping film wherein an inner layer made of a modified polypropylene, a metal layer made of aluminum foil, and an outer layer made of a polyamide were successively laminated in this order was used. The composite wrapping film made into a predetermined rectangular form was folded in two at the middles of the long sides in such a manner that the modified polypropylene inner layer would be positioned inwards. The overlapped side edge portions to each other of the long sides were subjected to heat sealing so as to form a bag wherein the short side edges were open. The laminate (raw body) was put into the bag in such a manner that the leads were projected from the bag. Subsequently, an electrolyte solution was poured into the bag under a reduced pressure, and then the short side edge portions were sealed under a reduced pressure to yield an electric double layer capacitor.

The used electrolyte solution was a 1.2 mol/L solution of triethylmethylammonium borofluoride in propylene carbonate.

(Electrode peel test)

A charging/discharging tester (HJ-101SM6, manufactured by Hokuto Denko Corp.) was used to apply a voltage of 2.5 V to an electric double layer capacitor at a temperature of 60°C so as to continue CC-CV charging (constant current-constant voltage charging) at a current density of 5 mA/F for 24 hours, and then the capacitor was discharged till the voltage turned into 0 V at 5 mA/F. Thereafter, the capacitor was disassembled to check whether or not the peeling of the electrodes was occurred. This electrode peel test was made about 10 samples of each of the above-mentioned capacitors. Any sample wherein peeling was occurred in only one of the anode and the cathode was determined as a sample wherein peeling was occurred.
Peel test results: the number of samples wherein peeling was occurred out of 10 samples is shown.
Electrode of Example 1: 0/10
Electrode of Comparative Example 1: 3/10
The electrode of Comparative Example 1 did not satisfy the standard of quality.

**Claims**

1. A method of producing an electrode for a capacitor, which comprises a current collector and an electrode layer on the current collector, the method comprising the step of:

   mixing at least a carbon material, a binder and a solvent, subjecting the resultant mixture to dispersing treatment with ceramic beads as a dispersing medium, so as to prepare an electrode layer coating material, and then applying the electrode layer coating material onto the current collector, so as to form the electrode layer.

2. A method of producing an electrode for a capacitor, which comprises a current collector, an undercoat layer on the current collector, and an electrode layer on the undercoat layer, the method comprising the steps of:

   mixing at least electrically conductive particles, a binder and a solvent, subjecting the resultant mixture to dispersing treatment with ceramic beads as a dispersing medium, so as to prepare an undercoat layer coating material, and then applying the undercoat layer coating material onto the current collector, so as to form the undercoat layer; and
   applying an electrode layer coating material which comprises at least a carbon material, a binder and a solvent onto the undercoat layer, so as to form the electrode layer.

3. A method of producing an electrode for a capacitor, which comprises a current collector, an undercoat layer on the current collector, and an electrode layer on the undercoat layer, the method comprising the steps of:

   mixing at least electrically conductive particles, a binder and a solvent, subjecting the resultant mixture to dispersing treatment with ceramic beads as a dispersing medium, so as to prepare an undercoat layer coating material, and then applying the undercoat layer coating material onto the current collector, so as to form the undercoat layer; and
   mixing at least a carbon material, a binder and a solvent, subjecting the resultant mixture to dispersing treatment with ceramic beads as a dispersing medium, so as to prepare an electrode layer coating material, and then applying the electrode layer coating material onto the undercoat layer, so as to form the electrode layer.

<div align="center">

**INTERNATIONAL SEARCH REPORT**

</div>

| International application No. |
| --- |
| PCT/JP2004/019446 |

**A. CLASSIFICATION OF SUBJECT MATTER**
Int.Cl⁷ H01G9/058

According to International Patent Classification (IPC) or to both national classification and IPC

**B. FIELDS SEARCHED**

Minimum documentation searched (classification system followed by classification symbols)
Int.Cl⁷ H01G9/058

Documentation searched other than minimum documentation to the extent that such documents are included in the fields searched

| | | | |
| --- | --- | --- | --- |
| Jitsuyo Shinan Koho | 1922–1996 | Toroku Jitsuyo Shinan Koho | 1994–2005 |
| Kokai Jitsuyo Shinan Koho | 1971–2005 | Jitsuyo Shinan Toroku Koho | 1996–2005 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X | JP 2001-93783 A (Junji ITO), 06 April, 2001 (06.04.01), Par. No. [0027] & US 6475670 B1 & DE 10046488 A | 1 |
| A | JP 63-316422 A (Asahi Glass Co., Ltd.), 23 December, 1988 (23.12.88), Page 3 (Family: none) | 2,3 |

☐ Further documents are listed in the continuation of Box C. ☐ See patent family annex.

| | |
| --- | --- |
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |
| Date of the actual completion of the international search<br>24 March, 2005 (24.03.05) | Date of mailing of the international search report<br>12 April, 2005 (12.04.05) |
| Name and mailing address of the ISA/<br>Japanese Patent Office | Authorized officer |
| Facsimile No. | Telephone No. |

Form PCT/ISA/210 (second sheet) (January 2004)

**EP 1 701 365 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2000208373 A
- JP 2001284184 A
- JP 2002075805 A
- JP 2002050546 A